## Europäisches Patentamt

## European Patent Office

## Office européen des brevets

(19)

(11) Veröffentlichungsnummer: **0 072 900**
**B1**

(12) **EUROPÄISCHE PATENTSCHRIFT**

(45) Veröffentlichungstag der Patentschrift:
03.09.86

(21) Anmeldenummer: 82105564.7

(22) Anmeldetag: 24.06.82

(51) Int. Cl.⁴: **C 08 F 255/02**, C 08 F 2/20,
C 08 F 14/06 //
(C08F255/02, 214:06)

(54) Verfahren zur Herstellung von Polymeren und Copolymeren des Vinylchlorids durch Suspensionspolymerisation und Verwendung für den Einsatz als Viskositätserniedriger in der Plastisolverarbeitung.

(30) Priorität: 20.08.81 DE 3132890

(43) Veröffentlichungstag der Anmeldung:
02.03.83 Patentblatt 83/9

(45) Bekanntmachung des Hinweises auf die Patenterteilung:
03.09.86 Patentblatt 86/36

(84) Benannte Vertragsstaaten:
BE DE FR GB IT NL SE

(56) Entgegenhaltungen:
EP-A-0 054 153
FR-A-2 236 898
GB-A-1 021 324
US-A-3 358 054
US-A-3 517 083
US-A-3 853 970

Die Akte enthält technische Angaben, die nach dem Eingang der Anmeldung eingereicht wurden und die nicht in dieser Patentschrift enthalten sind.

(73) Patentinhaber: **HÜLS AKTIENGESELLSCHAFT, Patentabteilung / PB 15 - Postfach 13 20, D-4370 Marl 1 (DE)**

(72) Erfinder: **Sielfeld, Gilbert, Dr., Lipper Weg 197, D-4370 Marl (DE)**
Erfinder: **de Jong, Rudolf, Dr., Bitterfelder Strasse 9a, D-4370 Marl (DE)**

EP 0 072 900 B1

## Beschreibung

Die Erfindung betrifft die Herstellung und Verwendung eines feinkörnigen Vinylchloridsuspensionspolymerisates für den Einsatz als Viskositätserniedriger in der Polyvinylchloridplastisolverarbeitung.

Unter Polyvinylchloridplastisolen oder Polyvinylchloridpasten versteht man im allgemeinen Dispersionen von feinen Polyvinylchloridpulvern in nicht zu stark anquellenden Weichmachern. Als verpastbare Polyvinylchloridtypen eignen sich hierzu Emulsionspolymerisate und insbesondere auch Mikrosuspensionspolymerisate. Es handelt sich hierbei um Polyvinylchloridprodukte, die nach der Polymerisation als Latex anfallen und im allgemeinen durch Sprühtrocknung zu agglomerierten Sekundärteilchen (Plastisoltyp) aufgearbeitet werden. Bei der Plastisolaufbereitung zerfallen diese Agglomerate überwiegend in Primärteilchen. Der Grad dieses Zerfalls und die Größenverteilung der Primärteilchen bestimmen die Fließeigenschaften der Paste.

Polyvinylchloridpasten werden hauptsächlich als Streichpasten, als Tauch- und Gießpasten und als Spritzpasten für die verschiedensten Fertigartikel verwendet.

Im allgemeinen werden für die Herstellung weichmacherarmer Fertigartikel Pasten mit niedrigen Viskositäten gewünscht. Für diesen Zweck ist bekannt, die Pastenviskosität durch Zusatz von nicht verpastbaren feinkörnigen Suspensionspolyvinylchloridprodukten (sog. Extender:PVC), die erst bei Geliertemperatur aufgeschlossen werden, zu erniedrigen.

Gemäß der DE-PS 16 45 668 können solche Suspensionspolymerisate zur Erniedrigung der Viskosität von Dispersionen aus pastenfähigem PVC und Weichmacher mit Hilfe von Methylhydroxipropylcellulosen, die in 2 gewichtsprozentiger Lösung eine Viskosität von 50 bis 500 m Pa. s bei 20 °C aufweisen, als einzigem Suspensionsstabilisator und unter Verwendung von monomerlöslichen Katalysatoren hergestellt werden. Ausweislich Vergleichsbeispiel C enthalten so hergestellte Polymerisate jedoch einen erheblichen Anteil grober Körner mit Teilchengröße > 100 µm. Dieses führt zu einer unerwünschten Sedimentation des Grobanteils und verursacht daher Schwierigkeiten beim Verarbeiten. Ferner führt der Grobanteil zu einer unerwünscht rauhen Oberfläche, insbesondere beim Auftrag sehr dünner Beschichtungen. Obwohl eine relativ hohe Viskositätserniedrigung der Pasten durch Zusatz so hergestellter Suspensionspolymerisate erzielt wird, genügen sie nicht den heutigen Forderungen der Praxis.

Wie aus dem folgenden Vergleichsversuch E zu entnehmen ist, können sehr feinteilige Polyvinylchloridpolymerisate durch Suspensionspolymerisation in Gegenwart eines Suspensionsstabilisators und eines Tensids oder Emulgators hergestellt werden.

Ein so hergestelltes Polymerisat eignet sich aufgrund seiner Feinheit und seines minimalen Grobanteils > 100 µm für dünne Beschichtungen und neigt nicht zur Sedimentation.

Aufgrund seiner sehr hohen Kornporosität, die durch den Zusatz von Emulgatoren oder Tensiden resultiert, bewirkt jedoch das so hergestellte Produkt eine unzureichende Pastenviskositätserniedrigung.

Diese Nachteile wurden überwunden durch ein Verfahren zur Herstellung feinteiliger PVC-Polymerisate als Viskositätserniedriger (Extender-PVC) für den Einsatz in der Plastisolverarbeitung, wie es durch die Patentansprüche gekennzeichnet ist. Erfindungsgemäß werden der Katalysator, das Ethylen/Vinylacetat-Copolymere und das Monomere oder Monomergemisch dem suspensionsstabilisatorfreien Suspensionswasser unter Rühren zugegeben, gegebenenfalls in Anwesenheit von pH-Puffersystemen. Anschließend wird vorzugsweise eine Zeitlang gerührt, z. B. 10 bis 60 Minuten. Zur Stabilisierung des Polymerisationsansatzes wird anschließend der Suspensionsstabilisator, zweckmäßigerweise in Form einer wäßrigen Lösung, mit einem Überdruck zugeführt. Die Suspensionsstabilisatoren können zweckmäßigerweise in einer 1- bis 3 gewichtsprozentigen wäßrigen Lösung mit einer Zufuhrgeschwindigkeit von 10 Gewichtsprozent/Minute bis 1 Gewichtsprozent/Minute der einzusetzenden Suspensionsstabilisatorkonzentration zugegeben. Die Zugabe des Suspensionsstabilisators erfolgt vor Beginn der Polymerisation. Es wird in Abwesenheit von Emulgatoren polymerisiert.

Als erfindungsgemäß einzusetzende Ethylen/Vinylacetat-Copolymere eignen sich solche, die aus 38 bis 55 Gewichtsprozent, vorzugsweise 42 bis 48 Gewichtsprozent, Vinylacetat bestehen und eine Viskositätszahl von 95 bis 210 ml/g; vorzugsweise 110 bis 160 ml/g, gemessen in Toluol in einer Konzentration von 0,005 g/cm³ bei 25 °C aufweisen. Sie werden in Mengen von 0.4 bis 8 Gewichtsprozent, vorzugsweise 0,6 bis 3 Gewichtsprozent, bezogen auf das Monomere oder Monomergemisch, eingesetzt. Die Ethylen/ Vinylacetat-Copolymeren sollen keine Emulgatoren enthalten, da das erfindungsgemäße Verfahren in Abwesenheit von Emulgatoren durchgeführt werden soll. Brauchbare Ethylen/ Vinylacetat-Copolymere sind als Handelsprodukt unter dem Handelsnamen LEVAPREN® erhältlich. Sie können durch radikalische Polymerisation in Lösung bei einem Druck von 100 bis 400 bar und einer Temperatur von 30 bis 150 °C hergestellt werden (DE-PS 11 26 613). Brauchbare Katalysatoren sind die in der Vinylchloridpolymerisation üblicherweise einzusetzenden Katalysatoren, wie Diacylperoxide, Peroxiddicarbonate, Alkylperester oder Azoverbindungen, wie

beispielsweise Diacetyl-, Dibenzoyl-, Dilauroyl-, 2, 4-Dichlorbenzoyl-peroxid; Peroxidicarbonate, wie Diisopropyl-, Dicyclohexyl-, Di-tert.-butylcyclohexyl-, Diethylcyclohexyl-, Dimyristyl-, Dicetyl-, Distearylperoxidicarbonat; Perester, wie Isopropyl-, tert.-Butylperacetat, tert.-Butylperoxtoat, tert.-Butylperpivalat, tert.-Butyl-, Iso-Amylper-neodecanoat; gemischte Anhydride organischer Sulfopersäuren und organischer Säuren, wie z. B. Acetylcyclohexylsulfonylperoxid; Azoverbindungen, wie z. B. Azoisobuttersäurenitril und Azobisdimethylvalerodinitril. Aus sicherheitstechnischen Gründen eignen sich besonders die bei Raumtemperatur festen und lagerstabilen Initiatoren. Beispiele geeigneter lagerstabiler Katalysatoren sind Lauroylperoxid, Bis-(4-t-butylcyclohexyl)-peroxidicarbonat, Dimyristyl-peroxidicarbonat, Dicetylperoxidicarbonat, Bis-(2-methyl-benzoyl)-peroxid. Die Katalysatoren können allein oder im Mischung eingesetzt werden, wobei man in üblicher Weise Mengen von 0,01 bis 0,3 Gewichtsprozent, vorzugsweise 0,01 bis 0,2 Gewichtsprozent, bezogen auf Monomeres, anwendet.

Als Suspensionsstabilisatoren eignen sich die bekannten und üblicherweise eingesetzten Verbindungstypen, wie Polyvinylacetat, teilweise hydrolysiertes Polyvinylacetat (Polyvinylalkohol), Celluloseether, wie sie z. B. in der Monographie Kainer, Polyvinylchlorid und Vinylchlorid-Mischpolymerisate, Springer-Verlag, Berlin / Heidelberg / New York (1965), Seite 16 ff, beschrieben sind. Vorzugsweise geeignet sind die im Handel befindlichen Methylcellulosen mit Methoxylsubstitutionsgraden von 22 bis 34 Prozent und Viskositäten von 10 bis 5000 m Pa. s, vorzugsweise 10 bis 100 m Pa. s, gemessen in 2 gewichtsprozentiger wäßriger Lösung (gemessen nach Brookfield bei 20 °C und 20 Upm) und/oder Methylhydroxipropylcellulosen mit Methoxylsubstitutionsgraden von 20 bis 32 Prozent und Hydroxi-Propoxyl-Substitutionsgraden von 2 bis 9 Prozent und Viskositäten von 25 bis 5000, vorzugsweise 40 bis 120 m Pa. s, gemessen in einer 2 gewichtsprozentigen wäßrigen Lösung (Ubbelohde-Kappilarviskosimeter) bei 20 °C.

Sie werden gewöhnlich in Mengen von 0.05 bis 1,5 Gewichtsprozent, vorzugsweise 0.1 bis 1.0 Gewichtsprozent, bezogen auf das Monomere, eingesetzt.

Als weitere Polymerisationshilfsstoffe sind gegebenenfalls pH-Puffersysteme wie Ammoniumsalze, Ammioniak oder Alkalicarbonate, Kettenregler wie z. B. aliphatische Aldehyde, Trichlorethylen, Hilfsstoffe gegen Wandabscheidungen, Antioxidantien zu verwenden.

Die Polymerisation kann bei üblichen Temperaturen zwischen 30 und 80 °C, vorzugsweise 45 bis 75 °C, durchgeführt werden.

Der Einsatz von bis zu 30 Gewichtsprozent mit Vinylchlorid polymerisierbarer Monomerer zur Herstellung von Copolymeren ist möglich. Beispiele brauchbarer Comonomerer sind Vinylester wie Vinylacetat, Vinylidenhalogenide wie Vinylidenchlorid, Acrylsäure- und Methacrylsäurealkylester mit 1 bis 18 Kohlenstoffatomen im Alkylrest wie die Methyl-, n-Butyl- und Laurylester, Ester der Maleinsäure wie Diethyl-, Dipropylmaleinat und schließlich Monoolefine wie Ethylen oder Propylen.

Die Aufarbeitung der zusammen mit verpastbaren PVC-Typen mitzuverwendenden Suspensionspolymerisate wird nach üblichen Verfahren durchgeführt. Die in üblicher Weise entgaste wäßrige PVC-Suspension kann zunächst in einer Zentrifuge entwässert, das Produkt gegebenenfalls mit reinem Wasser gewaschen und anschließend einem Stromtrockner zugeführt werden. Gegebenenfalls kann eine weitere Trocknung in einem Trommeltrockner vorgenommen werden.

Die nach den Ansprüchen 1 bis 5 hergestellten Extenderpolymerisate und -copolymerisate können erfindungsgemäß in Mischungen mit 95 bis 45 Gewichtsprozent, vorzugsweise 95 bis 50 Gewichtsprozent, Pastenpolyvinylchlorid als Viskositätserniedriger eingesetzt werden. Als mit Weichmacher und anderen Zusätzen verpastbare Polyvinylchloridtypen werden die bekannten Emulsions- oder Mikrosuspensionspolymerisate verwendet. Die Herstellung von Emulsions-Polyvinylchlorid ist in der o. a. Monographie von Kainer, Seiten 34 ff., beschrieben. Das Mikrosuspensions-Polyvinylchlorid wird hergestellt durch Verfahren, wonach das Vinylchlorid, ggf. zusammen mit anderen Monomeren, vor dem Erwärmen auf die Polymerisationstemperatur in Wasser, das ionogene und ggf. nichtionogene Emulgatoren enthält, zu einer stabilen Monomerdispersion homogenisiert und diese in an sich bekannter Weise mit Hilfe von monomerlöslichen Polymerisationskatalysatoren polymerisiert wird. Verfahren, denen diese Arbeitsweise zugrundeliegt, sind z. B. in den DE-PSS 962 834 und 10 69 387 sowie in der GB-PS 698 359 beschrieben. Die Herstellung der Polyvinylchloridpasten ist hinreichend bekannt und in der o. a. Monographie von Kainer auf Seite 332 ausführlich beschrieben. Zur weiteren Erläuterung der Erfindung dienen die folgenden Beispiele. Die angegebenen Teile sind Gewichtsteile.

**Beispiel 1**

Ein mit Impeller-Rührer und Pfaudler-Stromstörer ausgerüsteter 40 l-Polymerisationskessel aus rostfreiem Stahl wurde mit folgenden Bestandteilen beschickt:
15 500 Teile Wasser, 10 Teile Natriumcarbonat, 3.4 Teile Dicetylperoxidicarbonat, 6 Teile Dilauroylperoxid und 100 Teile eines Ethylen/Vinylacetat-Copolymeren mit einem Vinylacetatgehalt von 45 Gewichtsprozent und einer Viskositätszahl von 138 ml/g, gemessen in Toluol in einer Konzentration von 0,005 g/cm³ bei 25 °C. Der Kessel wurde geschlossen, mit Stickstoff gespült, evakuiert, anschließend mit 11 200 Teilen Vinylchlorid beschickt und eine Stunde bei Raumtemperatur gerührt. Danach wurden 40 Teile einer in 3000 Teilen Wasser gelösten Methylcellulose mit einer Viskosität von 60 m Pa. s, gemessen nach Brookfield (2gewichtsprozentige wäßrige Lösung bei 20 °C und 20 Upm) und einem Methoxylsubstitutionsgrad von 28 Prozent mit einer Zulaufgeschwindigkeit von 0.66 Teilen Methylcellulose pro Minute (50 Teile Lösung pro Minute) eingegeben. Der Kessel wurde auf 60° C aufgeheizt und bis zu einem Enddruck von 5 bar polymerisiert. Das Produkt wurde nach Entgasung vom größten Teil des Wassers getrennt, mit Wasser gespült und bei 50 °C in einem Wirbelbetttrockner getrocknet. Wie aus Tabelle 1 zu entnehmen ist, besitzt das so hergestellte Produkt ein sehr feines Korn und eine ausgeprägte viskositätserniedrigende Wirkung in Abmischung mit verpastbarem Polyvinylchlorid.

**Beispiel 2**

Es wurde wie in Beispiel 1 verfahren, jedoch wurden anstelle der 40 Teile Methylcellulose 50 Teile eingesetzt. Wie aus der Tabelle 1 zu entnehmen ist, besitzt das so hergestellte Produkt auch ein sehr feines Korn und eine ausgeprägte viskositätserniedrigende Wirkung in Abmischung mit verpastbarem Polyvinylchlorid.

**Beispiel 3**

Es wurde wie in Beispiel 1 verfahren, jedoch wurden anstelle der 40 Teile Methylcellulose 60 Teile und anstelle der 100 Teile Ethylen/Vinylacetat-Copolymer 200 Teile eingesetzt. Wie aus Tabelle 1 zu entnehmen ist, weist das so hergestellte Produkt ein sehr feines Korn auf und besitzt eine ausgeprägte viskositätserniedrigende Wirkung in Abmischung mit verpastbarem Polyvinylchlorid.

**Beispiel 4**

Es wurde wie in Beispiel 3 verfahren, jedoch wurden anstelle der 200 Teile Ethylen/Vinylacetat-Copolymeren 100 Teile eines Ethylen/Vinylacetat-Copolymeren mit einem Vinylacetatgehalt von 45 Gewichtsprozent und einer Viskositätszahl von 118 ml/g, gemessen in Toluol in einer Konzentration von 0.005 g/cm³ bei 25 °C, eingesetzt. Wie aus Tabelle 1 zu entnehmen ist, weist das so hergestellte Produkt ein sehr feines Korn auf und besitzt eine ausgeprägte viskositätserniedrigende Wirkung in Abmischung mit verpastbarem Polyvinylchlorid.

**Vergleichsbeispiel A**

Ein mit Impeller-Rührer und Pfaudler-Stromstörer ausgerüsteter 40 l-Polymerisationskessel aus rostfreiem Stahl wurde mit folgenden Bestandteilen beschickt: 17 000 Teile Wasser, 10 Teile Natriumcarbonat, 3.4 Teile Dicetylperoxidicarbonat, 6 Teile Dilauroylperoxid und 60 Teile der in Beispiel 1 eingesetzten Methylcellulose, gelöst jedoch in 1500 Teilen Wasser. Der Kessel wurde anschließend geschlossen, mit Stickstoff gespült, evakuiert, mit 11 200 Teilen Vinylchlorid beschickt und eine Stunde bei Raumtemperatur gerührt. Danach wurde der Kessel auf 60 °C aufgeheizt und bis zu einem Enddruck von 5 bar polymerisiert. Das Produkt wurde nach Entgasung vom größten Teil des Wassers getrennt, mit reinem Wasser gespült und bei 50 °C in einem Wirbelbetttrockner getrocknet. Wie aus Tabelle 1 zu entnehmen ist, weist das so hergestellte Produkt ein extrem grobes Korn und eine mangelhafte viskositätserniedrigende Wirkung in Abmischung mit verpastbarem Polyvinylchlorid auf.

**Vergleichsbeispiel B**

Es wurde wie in Vergleichsbeispiel A verfahren, jedoch wurden anstelle der 60 Teile Methylcellulose 40 Teile eingesetzt. Wie aus Tabelle 1 zu entnehmen ist, weist das so hergestellte Produkt auch einen zu hohen Anteil > 100 μm und eine mangelhafte viskositätserniedrigende Wirkung in Abmischung mit verpastbarem Polyvinylchlorid auf.

**Beispiel 5**

Es wurde wie in Beispiel 2 verfahren, jedoch wurden anstelle der Methylcellulose 60 Teile einer Methylhydroxipropylcellulose mit einem Methoxylgehalt von 22.1 Gewichtsprozent, einem Hydroxi-Propyl-Substitutionsgrad von 8.1 Gewichtsprozent und einer Viskosität von 100 m Pa. s (gemessen mit einem Ubbelohde-Kappilarviskosimeter an 2gewichtsprozentiger Lösung bei 20 °C) eingesetzt. Wie aus der Tabelle 1 zu entnehmen ist, weist das so hergestellte Produkt ein sehr feines Korn und eine ausgezeichnete viskositätserniedrigende Wirkung in Abmischung mit verpastbarem Polyvinylchlorid auf.

**Beispiel 6**

Es wurde wie im Beispiel 5 verfahren, jedoch wurden anstelle der 50 Teile Methylhydroxipropylcellulose 60 Teile eingesetzt. Wie aus Tabelle 1 zu entnehmen ist, weist das so hergestellte Produkt auch ein sehr feines Korn und eine ausgeprägte viskositätserniedrigende Wirkung in Abmischung mit verpastbarem Polyvinylchlorid auf.

**Beispiel 7**

Es wurde wie in Beispiel 5 verfahren, jedoch wurden anstelle der 100 Teile Ethylen-Vinylacetat-Copolymer 200 Teile eingesetzt. Wie aus Tabelle 1 zu entnehmen ist, weist das so hergestellte Produkt ein sehr feines Korn und eine ausgeprägte viskositätserniedrigende Wirkung in Abmischung mit verpastbarem Polyvinylchlorid auf.

**Vergleichsbeispiel C (gemäß DE-PS 16 45 668)**

Ein mit Impeller-Rührer und Pfaudler-Stromstörer ausgerüsteter 40 l-Polymerisationskessel aus rostfreiem Stahl wurde mit folgenden Bestandteilen beschickt: 17 000 Teile Wasser, 10 Teile Natriumcarbonat, 30 Teile einer in 1500 Teilen Wasser gelösten Methylhydroxyl-Propylcellulose mit einem Methyloxylsubstitutionsgrad von 22.1 Gewichtsprozent, einem Hydroxyl-Propyl-Substitutionsgrad von 8.1 Gewichtsprozent und einer Viskosität von 100 m Pa. s (gemessen mit einem Ubbelohde-Kappilarviskosimeter an 2gewichtsprozentigen wäßrigen Lösungen bei 20 °C), 3.4 Teile Dicetylperoxidicarbonat und 6 Teile Dilauroylperoxid. Der Kessel wurde geschlossen, mit Stickstoff gespült, evakuiert, danach mit 11 200 Teilen Vinylchlorid beschickt und eine Stunde bei Raumtemperatur gerührt. Anschließend wurde der Kessel auf 60 °C aufgeheizt und bis zu einem Enddruck von 5 bar polymerisiert. Das Produkt wurde nach Entgasung vom größten Teil des Wassers getrennt, mit reinem Wasser gespült und in einem Wirbelbetttrockner bei 50 °C getrocknet. Wie aus Tabelle 1 zu entnehmen ist, weist das so hergestellte Produkt einen unerwünscht hohen Grobanteil > 100µm auf.

**Vergleichsbeispiel D**

Es wird wie in Vergleichsbeispiel C verfahren, jedoch wurden anstelle der 30 Teile Methylhydroxylpropylcellulose 60 Teile eingesetzt. Wie aus der Tabelle 1 zu entnehmen ist, weist das so hergestellte Produkt einen noch zu hohen Anteil > 100µm und eine mangelhafte viskositätserniedrigende Wirkung in Abmischung mit verpastbarem Polyvinylchlorid auf.

**Vergleichsbeispiel E**

Es wird wie in Vergleichsbeispiel C verfahren, jedoch wurden anstelle der 30 Teile Methylhydroxylpropylcellulose 40 Teile und zusätzlich 2,5 Teile Natriumlaurylsulfat eingesetzt. Wie aus der Tabelle 1 zu entnehmen ist, weist das so hergestellte Produkt ein feines Korn, jedoch eine mangelhafte viskositätserniedrigende Wirkung in Abmischung mit verpastbarem Polyvinylchlorid auf.

Tabelle 1

| | Korngrößenverteilung Siebrückstand in Gew.-% bei folgenden Maschenweiten | | | | Schütt-dichte[1] (g/l) | WM-Aufnahme[2] g DOP 100 g PVC | Pastenviskosität[3] in d Pa . s bei folgenden Schergeschwindigkeiten | | | | Reiß-kraft[4] (N/mm[2]) | Reiß-dehnung (%) |
|---|---|---|---|---|---|---|---|---|---|---|---|---|
| | 40 µm | 63 µm | 100 µm | 160 µm | | | $0.3s^{-1}$ | $1s^{-1}$ | $10s^{-1}$ | $100s^{-1}$ | | |
| Beispiel 1 | 63 | 0.2 | – | – | 671 | 6.0 | 96 | 82 | 87 | 99 | 13.7 | 133 |
| Beispiel 2 | 71 | 0.1 | – | – | 706 | 6.1 | 88 | 88 | 98 | 110 | 18.3 | 208. |
| Beispiel 3 | 59 | 1.0 | – | – | 723 | 4.8 | 98 | 87 | 92 | 106 | 13.2 | 117 |
| Beispiel 4 | 77 | 0.8 | 0.01 | – | 673 | 6.1 | | | | | | |
| Vergleichsbeispiel A | 79 | 56.0 | 3.1 | 10 | 601 | 13.1 | 162 | 152 | 161 | 167 | 11.6 | 120 |
| Vergleichsbeispiel B | 89 | 70 | 50 | 3.9 | 634 | 16.2 | – | 271 | 341 | – | 13.1 | 137 |
| Beispiel 5 | 60 | 1.0 | 0.01 | – | 698 | 5.8 | 97 | 93 | 104 | 119 | 13.0 | 131 |
| Beispiel 6 | 61 | 0.4 | – | – | 660 | 6.3 | 107 | 96 | 107 | 120 | 14.4 | 123 |
| Beispiel 7 | 50 | 0.4 | – | – | 736 | 5.0 | 91 | 87 | 96 | 111 | 14.4 | 115 |
| Vergleichsbeispiel C | 81 | 33 | 9.2 | 0.2 | 640 | 10.3 | 138 | 131 | 146 | 147 | 11.8 | 120 |
| Vergleichsbeispiel D | 84 | 58 | 5.1 | 0.2 | 574 | 13.8 | 208 | 208 | 223 | – | 11.9 | 112 |
| Vergleichsbeispiel E | 63 | 2.6 | 0.2 | | 523 | 14.0 | 687 | 637 | 569 | 494 | 16.2 | 156 |

1) nach DIN 53 468

2) nach DIN 53 417/1 (Zentrifugierverfahren)

3) Pastenrezeptur: 50 Gewichtsteile Emulsions-polyvinylchlorid

50 Gewichtsteile erfindungsgemäß hergestelltes Polyvinylchlorid

38 Gewichtsteile Di-2-Ethylhexylphthalat

2 Gewichtsteile (Bitte Zusammensetzung d, Stab. in etwa angeben)

Pastenviskosität wurde in einem Rheomat (Fa, Contraves) nach 24 h Lagerzeit gemessen.

4) Gelierfähigkeit der Paste (nach Entlüftung) wurde an 1 mm-Preßplatten (Gelierzeit von 1 min bei 170 °C) nach DIN 53 455 (Zugversuch) gemessen. Die Reißkraft-Werte und die Reißdehnungs-Werte sind Durchschnittswerte aus 7 Meßwerten.

## Patentansprüche

1. Verfahren zur Herstellung von Polymeren und Copolymeren des Vinylchlorids durch Suspensionspolymerisation in Gegenwart eines oder mehrerer Suspensionsstabilisatoren, eines oder mehrerer öllöslicher Katalysatoren und gegebenenfalls von pH-Puffersystemen, dadurch gekennzeichnet,

daß in Gegenwart von 0.4 bis 8.0 Gewichtspiozent, bezogen auf das Monomere, eines Ethylen-Vinylacetat-Copolymeren mit einem Vinylacetatgehalt von 38 bis 55 Gewichtsprozent und einer Viskositätszahl von 95 bis 210 ml/g, gemessen in Toluol in einer Konzentration von 0.005 g/cm³ bei 25 °C, polymerisiert wird, und daß die Katalysatoren, das Ethylen-Vinylacetat-Copolymere und das Monomere oder Monomerengemisch dem Polymerisationsansatz vor dem Suspensionsmittel zugegeben werden,

2. Verfahren nach Anspruch 1, dadurch gekennzeichnet, daß der Vinylacetatgehalt des Ethylen-Vinylacetat-Copolymeren 42 bis 48 Gewichtsprozent beträgt.

3. Verfahren nach Anspruch 1 oder 2, dadurch gekennzeichnet, daß die Viskositätszahl des Ethylen-Vinylacetat-Copolymeren 110 bis 160 ml/g, gemessen in Toluol in einer Konzentration von 0.005 g/cm³ bei 25°C beträgt.

4. Verfahren nach Anspruch 1 bis 2, dadurch gekennzeichnet, daß als Suspensionsstabilisatoren 0.1 bis 1,0 Gewichtsprozent einer Methylcellulose mit einem Methoxylsubstitutionsgrad von 22 bis 31 Prozent und einer Viskosität von 10 bis 5000 m Pa. s, vorzugsweise 10 bis 100 m Pa. s, gemessen in 2gewichtsprozentiger wäßriger Lösung (nach Brookfield bei 20 °C und 20 Upm) und/oder einer Methylhydroxipropylcellulose mit einem Methoxylsubstitutionsgrad von 20 bis 32 Prozent und einem Hydroxi-Propoxyl-Substitutionsgrad von 2 bis 9 Prozent und einer Viskosität von 25 bis 5000 m Pa. s, vorzugsweise 40 bis 120 m Pa. s, gemessen in einer 2gewichts-prozentigen wäßrigen Lösung (Ubbelohde-Kappilarviskosimeter bei 20 °C), eingesetzt werden.

5. Verfahren nach Anspruch 1 bis 3, dadurch gekennzeichnet, daß in Gegenwart von 0.6 bis 3.0 Gewichtsprozent Ethylen-Vinylacetat-Copolymer, bezogen auf das Monomere oder Monomergemisch, polymerisiert wird.

6. Verwendung der nach Anspruch 1 bis 5 hergestellten Vinylchloridpolymerisate und -copolymerisate zur Erniedrigung der Viskosität von Dispersionen aus pastenfähigen Vinylchloridpolymerisaten und Copolymerisaten, Weichmachern und gegebenenfalls weiteren Zusatzstoffen.

## Claims

1. A process for the production of a homopolymer or copolymer of vinyl chloride by suspension polymerisation in the presence of one or more suspension stabilisers, one or more oil-soluble catalysts and optionally a pH buffer system, characterised in that polymerisation is carried out in the presence of 0.4 to 8 per cent by weight, based on the monomer(s), of an ethylene/vinyl acetate copolymer having a vinyl acetate content of 38 to 55 per cent by weight and a viscosity number of 95 to 210 ml/g, measured in toluene at a concentration of 0.005 g/cm³ at 25°C, and in that the catalyst(s), the ethylene/ vinyl acetate copolymer and the monomer or monomer mixture are added to the polymerisation charge before the suspending agent.

2. A process according to claim I, characterised in that the vinyl acetate content of the ethylene/vinyl acetate copolymer amounts to 42 to 48 per cent by weight.

3. A process according to claim 1 or 2, characterised in that the viscosity number of the ethylene/vinyl acetate copolymer amounts to from 110 to 160 ml/g, measured in toluene at a concentration of 0.005 g/cm³ at 25°C.

4. A process according to claim 1 or 2, characterised in that there are used as suspension-stabiliser(s) 0.1 to 1.0 per cent by weight of a methyl cellulose having a degree of methoxy substitution of 22 to 31 per cent and a viscosity of 10 to 5000 m Pa.s, preferably 10 to 100 m Pa. s, measured in a 2 per cent by weight aqueous solution (according to Brookfield at 20°C and 20 Upm) and/or of a methyl hydroxypropyl cellulose having a degree of methoxy substitution of 20 to 32 per cent and a degree of hydroxypropyl substitution of 2 to 9 per cent and a viscosity of 25 to 5000 m Pa. s, preferably 40 to 120 m Pa. s, measured in a 2 per cent by weight aqueous solution (Ubbelohde capillary viscometer at 20°C).

5. A process according to any of claims 1 to 3, characterised in that the polymerisation is carried out in the presence of 0.6 to 3 per cent by weight of ethylene/ vinyl acetate copolymer, based on the monomer or monomer mixture.

6. The use of a vinyl chloride homopolymer or copolymer produced according to any of claims 1 to 5 for reducing the viscosity of a dispersion comprising a pasty vinyl chloride homopolymer or copolymer, a plasticiser and optionally one or more additional additives.

**Revendications**

1. Procédé pour la préparation de polymères et copolymères du chlorure de vinyle par polymérisation en suspension en présence d'un ou plusieurs stabilisants de suspension, d'un ou plusieurs catalyseurs liposolubles et éventuellement de systèmes tampons de pH, caractérisé par le fait que l'on polymérise en présence de 0,4 à 8,0 % en poids, relativement au monomère, d'un copolymère d'éthylène et d'acétate de vinyle ayant une teneur en acétate de vinyle de 38 à 55 % en poids et un indice de viscosité de 95 à 210 ml/g, mesuré dans le toluène à une concentration de 0,005 g/cm$^3$ à 25°C et que l'on ajoute au mélange de polymérisation les catalyseurs, le copolymère d'éthylène et d'acétate de vinyle et le monomère ou mélange de monomères avant l'agent de suspension.

2. Procédé selon la revendication 1, caractérisé par le fait que la teneur en acétate de vinyle du copolymère d'éthylène et d'acétate de vinyle est de 42 à 48 % en poids.

3. Procédé selon l'une des revendications 1 et 2, caractérisé par le fait que l'indice de viscosité du copolymère d'éthylène et d'acétate de vinyle est de 110 à 160 ml/g, mesuré dans le toluène à une concentration de 0,005 g/cm$^3$ à 25°C.

4. Procédé selon les revendications 1 et 2, caractérisé par le fait que l'on utilise, comme stabilisants de suspension, de 0,1 à 1,0 % en poids d'une méthyl-cellulose ayant un degré de substitution méthoxyle de 22 à 31 % et une viscosité de 10 à 5 000 mPa. s, de préférence de 10 à 100 mPa. s, mesurée en solution aqueuse à 2 % en poids (selon Brookfield à 20°C et 20 tours/mn) et/ou d'une méthyl-hydroxy-propylcellulose ayant un degré de substitution méthoxyle de 20 à 32 % et un degré de substitution hydroxy-propoxyle de 2 à 9 % et une viscosité de 25 à 5 000 mPa. s, de préférence de 40 à 120 mPa. s, mesurée dans une solution aqueuse à 2 % en poids (viscosimètre à capillaire Ubbclohde à 20°C).

5. Procédé selon les revendications 1 à 3, caractérisé par le fait que l'on polymerise en présence de 0,6 à 3,0 % en poids de copolymère d'éthylène et acétate de vinyle, relativement au monomère ou mélange de monomères.

6. L'utilisation des produits de polymérisation et de copolymérisation préparés selon les revendications 1 à 5 pour l'abaissement de la viscosité de dispersions formées de produits de polymérisation et de copolymérisation du chlorure de vinyle et transformables en pâte, de plastifiants et éventuellement d'autres additifs.